Europäisches Patentamt

European Patent Office

Office européen des brevets

(11) Publication number: **0 052 466**
**B1**

# EUROPEAN PATENT SPECIFICATION

(45) Date of publication of patent specification: **20.02.85**

(51) Int. Cl.⁴: **G 01 K 1/14,** G 01 K 1/08

(21) Application number: **81305286.7**

(22) Date of filing: **06.11.81**

(54) **Thermal sensor for detecting temperature distribution.**

(30) Priority: **07.11.80 JP 159782/80**

(43) Date of publication of application:
**26.05.82 Bulletin 82/21**

(45) Publication of the grant of the patent:
**20.02.85 Bulletin 85/08**

(84) Designated Contracting States:
**DE FR GB SE**

(56) References cited:
US-A-3 018 663
US-A-3 637 438
US-A-3 939 012
US-A-4 028 139

(73) Proprietor: **KABUSHIKI KAISHA KOBE SEIKO SHO**
**3-18 1-chome, Wakinohama-cho Chuo-ku**
**Kobe 651 (JP)**

(72) Inventor: **Yoshio, Kawate**
**25-102, 3, Asahigaoka**
**Toyonaka-shi Osaka-fu (JP)**
Inventor: **Nobuyuki, Nagai**
**4-29-5, Edayoshi**
**Tarumi-ku Kobe-shi (JP)**
Inventor: **Takefumi, Horiuchi**
**3-7, Takakuradai 6-chome**
**Suma-ku, Kobe-shi (JP)**
Inventor: **Teruhisa, Uehara**
**2-10 Izumidai 5-chome**
**Kita-ku Kobe-shi (JP)**
Inventor: **Susumu, Hachiya**
**586, Jiyugaoka 2-chome Naka,Shijimi-cho**
**Miki-shi Hyogoken (JP)**

(74) Representative: **Wright, Hugh Ronald et al**
**Brookes & Martin 52/54 High Holborn**
**London WC1V 6SE (GB)**

Courier Press, Leamington Spa, England.

## Description

The invention relates to a thermal sensor for detecting temperature distributions, and preferably to a sensor which is capable of continuously and with high precision detecting the temperature distribution in a deposited layer on the refractory wall of a furnace as well as the temperature distribution in the refractory wall itself.

A layer of deposit is usually formed on the refractory walls of a blast furnace, particularly, on the refractory wall of a shaft furnace which is cooled by a cooling box. Once formed, such a deposited layer continues to grow in thickness during the operation of the furnaces and destabilizes the operation of the furnace to a considerable degree not only by reducing the capacity. of the furnace but also by disturbing the uniform flow of the loaded material and gas in the furnace.

In order to curb the formation and growth of such a deposited layer, it has been the general practice to measure the thickness of the layer by inserting elongated scales through a number of bores in the furnace wall whilst blasting is stopped, and removing the deposited layer by explosives when it has grown to a predetermined thickness. The use of explosives makes the removal of the layer expensive in view of the damage caused to the furnace walls and the danger involved in the job.

However, once the deposited layer has grown to a certain thickness, there has been no other method but the above-mentioned explosive method to remove the deposited layer although it is hazardous to the stable operation of the blast furnace. More particularly, from the stand-point of safe operation, it is preferred that the deposits should be removed as promptly as possible and in a safe and simple manner. For this purpose, the formation of the deposited layer and its thickness should be kept under observation so that it can be removed by mechanical means before it reaches a substantial thickness beyond which it can only be removed by explosives.

In view of the difficulty of directly observing the formation and growth of the deposited layer with the naked eye, it may occur to those skilled in the art to provide a sensor projecting from the refractory walls of the furnace, and letting the deposited layer grow on the sensor so as to allow one to judge the condition of the deposited layer on the basis of the information from the sensor. However, there have been developed no sensors which have sufficiently high response and sensitivity in respect of temperature measurement to successfully realise such a method.

US specification 3018663 shows a thermal sensor for use in a furnace for carrying out the opposite function, that is, to determine the wear in a furnace wall rather than the growth of a deposited layer on a furnace wall. It includes an arrangement in which there are two thermocouples at a spaced distance along the length of the thermal sensor from which the temperature of the outer end of the sensor is detected. However, so far as can be understood, it is the temperature gradient along the length of the thermal sensor which is required and therefore it is only necessary for the outer end of the thermal sensor to be exposed to the temperature in the furnace.

According to the present invention, there is provided a thermal sensor comprising a tubular outer protective casing, a temperature probe assembly mounted within said tubular outer casing and including an inner tubular sheath, a plurality of thermocouples or resistance thermometers with respective temperature sensing areas mounted within said inner tubular sheath and located at different points spaced along the length of said probe assembly, insulating filler material disposed in said inner tubular sheath to insulate said thermocouples or thermometers from one another, and a heat-insulating filler material disposed between said tubular outer casing and said inner tubular sheath characterised in that there are provided annular fin members in thermal contact with said temperature sensing areas of said probe assembly, said fin members extending to said tubular outer casing, and in that said heat insulating material is disposed between said tubular outer casing and said inner tubular sheath to insulate said fin members from one another.

A temperature probe assembly of generally similar construction is described in our prior Japanese Utility Model Application No. 55-105140 equivalent to GB—A—2 083 227 published 17.03.82 directed to "A Temperature Probe Assembly For The Detection Of Temperature Distribution". Therefore, some of the details of the construction of the probe assembly are not discussed in this Specification.

The above features and advantages of the present invention will become apparent from the following description and the appended claims, taken in conjunction with the accompanying drawings which show by way of example a preferred embodiment of the invention.

In the accompanying drawings:

Figure 1 is a partly cutaway perspective view of a thermal sensor according to the present invention, in which insulating filler material is omitted for the convenience of illustration;

Figure 2 is a longitudinal section of the thermal sensor taken on line II—II of Figure 1; and

Figure 3 is a cross-section taken on line III—III of Figure 1.

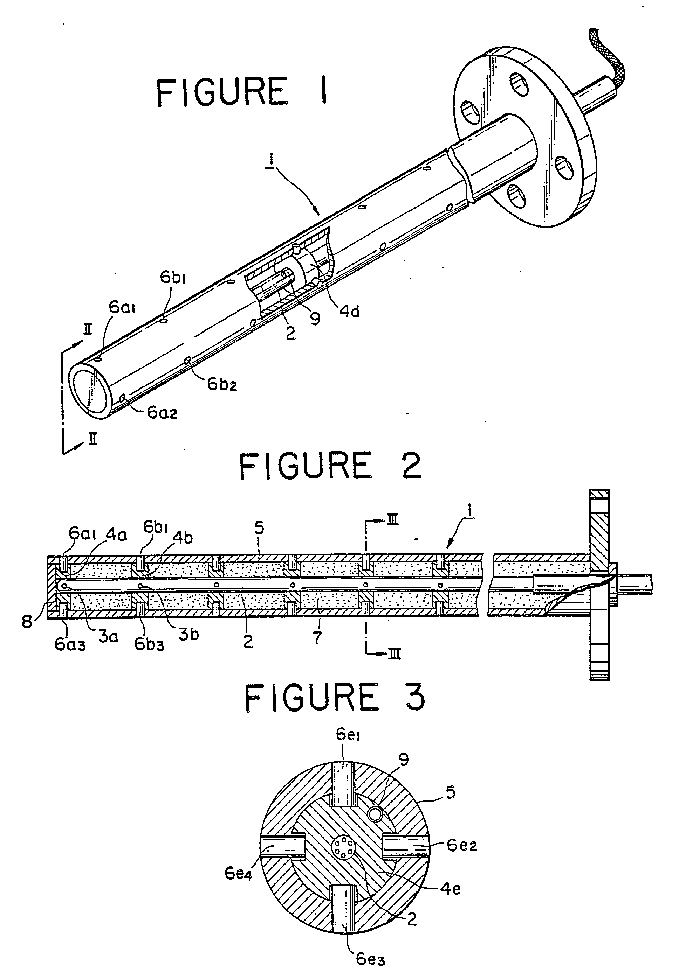

Referring to these Figures 1 to 3, there is shown a thermal sensor according to the invention including a temperature probe 2 for the detection of temperature distribution (hereinafter referred to simply as "probe assembly"). The probe 2, which is mounted within a tubular outer protective casing 5, includes an inner tubular sheath, insulating material being disposed within the inner tubular sheath. The thermal sensor includes a number of annular disc-like fins 4a, 4b, ... which are fitted around temperature sensing areas or points 3a, 3b, ... of sheath type thermocouples or resistance type thermometers which are provided at suitable spaced intervals along the length of the probe assembly. The fin members 4a, 4b, . . . are fixed to the tubular outer protective casing 5 through positioning means 6a1, 6a2, 6a3, 6a4, 6b1, 6b2, . . . The provision of the disc-like fin members 4a, 4b, . . . enhances the sensitivity and thermal response of the probe. In this connection, of course the temperature probe (particularly the temperature sensing points 3a, 3b, . . .), the disc-like fin members 4a, 4b, . . . and the outer protective casing should be maintained in good thermal contact with each other.

The compartments which are partitioned by the fin members 4a, 4b, . . . between the probe assembly 2 and outer protective casing 5 are filled with a heat insulating material 7 to ensure the endurance of the probe assembly and to reduce heat transfer in the longitudinal direction of the sensor so that each sensing point 3a, 3b, . . . measures the temperature at its own position and is not affected by heat flow along the thermal sensor thereby enhancing the accuracy of the temperature measurement. The insulating material 7 is preferably a refractory material such as MgO powder.

The front end of the protective casing 5 which is exposed to the furnace is closed by a plate 8 to shut off the furnace gases and to prevent deterioration of the sensor 1, thereby maintaining the stability of the temperature measurement over a long time period.

If desired, a supervisory pipe 9 may be provided between and parallel with the probe assembly 2 and outer protective casing 5 through the disc-like fin members 4a, 4b, . . . to check for bending of the sensor 1 and the degree of deterioration of the output temperature signals during use over a long time period. In addition, the supervisory pipe 9 facilitates the maintenance and service of the sensor 1.

The thermal sensor with the above-described construction according to the invention has a remarkably improved response sensitivity in temperature measurement due to the provision of the fin members which are located to surround the respective temperature sensing points of the probe assembly and thermally insulated from each other by the filler material. A material of high heat resistance and strength is used for the outer protective casing, so that the sensor can withstand the high temperatures and the weight of the material loaded into the furnace and allows continued use over a long period of time. Further, the supervisory pipe which is provided integrally in the sensor can detect even slight bending or deterioration in the measured temperature output which might occur to the sensor when used continuously over a long time period, facilitating the maintenance and service of the sensor. It follows that the deposited layer can be measured and removed from the refractory walls of the furnace safely and easily when it is still in the early stage of growth, to maintain stable operation of the blast furnace.

The thermal sensor according to the present invention can also serve as a means for studying the mechanisms of formation and growth of the deposited layer in a blast furnace and gives data which can be used for the development of a novel method to suppress the formation and growth of the deposited layer during operation of a blast furnace.

Although the invention has been described and shown by way of one preferred embodiment, it is to be understood that various alterations or modifications can be made thereto without departing from the scope of the invention as defined in the appended claims.

## Claims

1. A thermal sensor (1) comprising a tubular outer protective casing (5), a temperature probe assembly (2) mounted within said tubular outer casing (5) and including an inner tubular sheath, a plurality of thermocouples or resistance thermometers with respective temperature sensing areas (3a, 3b, . . .) mounted within said inner tubular sheath and located at different points spaced along the length of said probe assembly (2), insulating filler material disposed in said inner tubular sheath to insulate said thermocouples or thermometers from one another, and a heat-insulating filler material (7) disposed between said tubular outer casing (5) and said inner tubular sheath characterised in that there are provided annular fin members (4a, 4b, . . .) in thermal contact with said temperature sensing areas (3a, 3b, . . .) of said probe assembly (2), said fin members extending to said tubular outer casing (5), and in that said heat insulating material (7) is disposed between said tubular outer casing (5) and said inner tubular sheath to insulate said fin members (4a, 4b, . . .) from one another.

2. A thermal sensor as claimed in claim 1, further characterised by a supervisory pipe (9) mounted longitudinally within said tubular outer casing (5) passing through said annular fin members (4a, 4b, . . .) to detect bending or deterioration of the temperature output signals of said sensor.

## Description

1. Détecteur thermométrique (1) comportant un logement protecteur extérieur tubulaire (5), un ensemble de sonde thermométrique (2) monté dans ledit logement extérieur tubulaire (5) et comportant une gaine tubulaire intérieure, une pluralité de thermocouples ou de thermomètres à résistance à zones de détection de température respectives (3a, 3b, . . .) montés dans ladite gaine tubulaire intérieure et situées en différents points espacés sur la longueur dudit ensemble de sonde (2), de la matière de remplissage isolante disposée dans ladite gaine tubulaire intérieure pour isoler les uns des autres lesdits thermocouples ou thermomètres, et une matière de remplissage d'isolation thermique (7) disposée entre ledit logement extérieur tubulaire (5) et ladite gaine tubulaire intérieure, caractérisé en ce qu'il est prévu des éléments d'ailette annulaires (4a, 4b, ...) en contact thermique avec lesdites zones de détection de température (3a, 3b, ...) dudit ensemble de sonde (2), lesdits éléments d'ailette s'étendant jusqu'audit logement extérieur tubulaire (5), et en ce que ladite matière d'isolation thermique (7) est disposée entre ledit logement tubulaire extérieur (5) et ladite gaine tubulaire intérieure pour isoler lesdits éléments d'ailette (4a, 4b, ...) les uns des autres.

2. Détecteur thermométrique selon la revendication 1, caractérisé, en outre, par un tube de surveillance (9) monté longitudinalement dans ledit logement extérieur tubulaire (5) traversant lesdits éléments d'ailette annulaire (4a, 4b, ...) pour déceler une flexion ou une détérioration des signaux de température de sortie dudit détecteur.

**Patentansprüche**

1. Temperaturfühler (1) mit einem rohrförmigen äußeren Schutzgehäuse (5), mit einer Temperatursondeneinheit (2), die innerhalb des rohrförmigen äußeren Gehäuses (5) eingebaut ist und ein inneres rohrförmiges Futteral umfaßt, mit mehreren Thermoelementen bzw. Widerstandsthermometern mit entsprechenden temperaturempfindlichen Bereichen (3a, 3b, ...), die innerhalb des inneren rohrförmigen Futterals eingebaut und an verschiedenen voneinander beabstandeten Stellen entlang der Länge der Sondeneinheit (2) angeordnet sind, wobei ein isolierender Füllstoff innerhalb des rohrförmigen Futterals zur Isolierung der Thermoelemente bzw. Thermometer voneinander vorgesehen ist, und wobei ein wärmeisolierender Füllstoff (7) zwischen dem rohrförmigen äußeren Gehäuse (5) und dem inneren rohrförmigen Futteral eingebracht ist, dadurch gekennzeichnet, daß ringförmige Rippenelemente (4a, 4b, ...) in thermischem Kontakt mit den temperaturempfindlichen Bereichen (3a, 3b, ...) der Sondeneinheit (2) vorgesehen sind, die sich auf das rohrförmige äußere Gehäuse (5) zu erstrecken, und daß der wärmeisolierende Füllstoff (7) zwischen dem rohrförmigen äußeren Gehäuse (5) und dem inneren rohrförmigen Futteral zur Isolierung der Rippenelemente (4a, 4b, ...) voneinander angeordnet ist.

2. Temperaturfühler nach Anspruch 1, ferner gekennzeichnet durch ein Überwachungsrohr (9), das in Längsrichtung innerhalb des rohrförmigen äußeren Gehäuses (5) eingebaut ist und durch die ringförmigen Rippenelemente (4a, 4b, ...) geht, um eine Verformung bzw. eine Verschlechterung der Temperaturausgangssignale des Fühlers zu erfassen.

# FIGURE 1

# FIGURE 2

# FIGURE 3